(19) Europäisches Patentamt / European Patent Office / Office européen des brevets

(11) **EP 3 402 212 A1**

(12) **EUROPEAN PATENT APPLICATION**
published in accordance with Art. 153(4) EPC

(43) Date of publication:
**14.11.2018 Bulletin 2018/46**

(51) Int Cl.:
**H04N 21/439** (2011.01)

(21) Application number: **16883057.8**

(22) Date of filing: **04.06.2016**

(86) International application number:
**PCT/CN2016/084863**

(87) International publication number:
**WO 2017/117916 (13.07.2017 Gazette 2017/28)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **07.01.2016 CN 201610013640**

(71) Applicant: **Shenzhen TCL Digital Technology Ltd. Qianhai Shenzhen - Hong Kong Cooperation Zone (CN)**

(72) Inventors:
• **KANG, Junping**
  **Qianhai Shenzhen-Hong Kong Cooperation Zone (CN)**
• **LIU, Weifang**
  **Qianhai Shenzhen-Hong Kong Cooperation Zone (CN)**
• **GAO, Yunpei**
  **Qianhai Shenzhen-Hong Kong Cooperation Zone (CN)**
• **JIANG, Guoding**
  **Qianhai Shenzhen-Hong Kong Cooperation Zone (CN)**

(74) Representative: **Kuhnen & Wacker**
**Patent- und Rechtsanwaltsbüro PartG mbB**
**Prinz-Ludwig-Straße 40A**
**85354 Freising (DE)**

(54) **AUDIO DATA PUSHING METHOD AND SYSTEM**

(57)    Disclosed is an audio data pushing method, which includes the following steps: step 1, when an audio data pushing system entering into an extraction cycle, extracting audio data from a buffer zone of the smart television, and pushing the audio data to a wireless communication protocol stack for transmission; step 2, the audio data pushing system acquiring a current remaining amount of audio data in the buffer zone, and acquiring a source type corresponding to the audio data in the buffer zone; and step 3, the audio data pushing system updating a starting value for extracting audio data on the basis of the reference delay value corresponding to the source type, and adjusting the extraction cycle according to a size relationship between the current remaining amount of the audio data and the updated starting value, and going to perform step 1. The present disclosure also provides an audio data pushing system. The present disclosure can improve the transmission efficiency of the audio data.

when an audio data pushing system entering into an extraction cycle, extracting audio data from a buffer zone of the smart television, and pushing the audio data to a wireless communication protocol stack for transmission — S10

the audio data pushing system acquiring a current remaining amount of audio data in the buffer zone, and acquiring a source type corresponding to the audio data in the buffer zone — S20

the audio data pushing system updating a starting value for extracting audio data based on a reference delay value corresponding to the acquired source type, and adjusting the extraction cycle according to a size relationship between the current remaining amount of the audio data and the updated starting value — S30

FIG. 1

## Description

## FIELD

This disclosure generally relates to the technical field of smart terminals, and more particularly relates to an audio data pushing method and system.

## BACKGROUND

Recently, a plurality of playback modes are provided to improve the flexibility of audio playback, as well as to avoid the restriction of the audio cable. For example, a smart television having a function of supporting blue-tooth wireless audio, the smart television gathers audio signal decoded by a decoding module, and transmits the audio signal to the blue-tooth protocol stack, then the audio signal can be transmitted to a far end through a blue-tooth module. However, there is a great time delay during the process of gathering audio signal and transmitting the audio signal to the blue-tooth protocol stack. Currently, gathering audio signal to the blue-tooth protocol stack is carried out by: periodically caching the audio signal to a buffer zone, then periodically extracting the audio signal from the buffer zone and writing the extracted audio signal into the blue-tooth protocol stack. As the rates of the smart television for decoding and separating the audio data from inputted information sources are different depending on different types of information source, usually there are a plurality of audio data piled up in the buffer zone and cannot be sent out for not entering into a extracting cycle, thus causing a low audio data transmitting efficiency.

## SUMMARY

It is therefore one main object of this disclosure to provide an audio data pushing method and an audio data pushing system, aiming to improve the
transmission efficiency of audio data.
In order to achieve the above object, the audio data pushing method provided by the present disclosure includes:

step 1, when an audio data pushing system entering into an extraction cycle, extracting audio data from a buffer zone of the smart television, compressing the extracted audio data, and pushing the compressed audio data to a wireless communication protocol stack for transmission;
step 2, the audio data pushing system acquiring a current remaining amount of audio data in the buffer zone, and acquiring a source type corresponding to the audio data in the buffer zone; and
step 3, the audio data pushing system updating a starting value for extracting audio data based on a reference delay value corresponding to the source type, and revising the updated starting value based on a preset fault-tolerant value, adjusting the extraction cycle according to a size relationship between the current remaining amount of the audio data and the revised starting value, and going to perform step 1, wherein,
when the current remaining amount of the audio data is great than the starting value, shortening the extraction cycle; and
when the current remaining amount of the audio data is low than the starting value, extending the extraction cycle.

In an exemplary embodiment, before the step of the audio data pushing system acquiring a source type corresponding to the audio data in the buffer zone, further includes:

the audio data pushing system recording the acquired current remaining amount of audio data;
when the number of the recorded remaining amount of audio data reaches to a first preset threshold value, the audio data pushing system calculating the average value of the recorded remaining amount of audio data, and updating the current remaining amount of the audio data to the calculated average value, and going to perform the step of the audio data pushing system acquiring the source type corresponding to the audio data in the buffer zone.

In an exemplary embodiment, after the step of the audio data pushing system recording the acquired current remaining amount of audio data, further includes: when the number of the recorded remaining amount of audio data does not reach to the first preset threshold value, going to perform step 1.
In an exemplary embodiment, after the step of pushing the compressed audio data to a wireless communication protocol stack for transmission, further includes:
the audio data pushing system receiving a packet loss rate returned from a target terminal of the audio data on the basis of received audio data;
the audio data pushing system adjusting a compression ratio of the compressing operation according to a size relationship between the packet loss rate and a second threshold value, wherein,
[0011]    when the packet loss rate is great than the second preset threshold value, increasing the compression ratio of the compressing operation;
when the packet loss rate is low than the second preset threshold value, reducing the compression ratio of the compressing operation.
Furthermore, the present disclosure also provides an audio data pushing method, which includes:

step 1, when an audio data pushing system entering into an extraction cycle, extracting audio data from a buffer zone of the smart television, and pushing the audio data to a wireless communication protocol stack for transmission;

step 2, the audio data pushing system acquiring a current remaining amount of audio data in the buffer zone, and acquiring a source type corresponding to the audio data in the buffer zone; and

step 3, the audio data pushing system updating a starting value for extracting audio data based on a reference delay value corresponding to the source type, and adjusting the extraction cycle according to a size relationship between the current remaining amount of the audio data and the updated starting value, and going to perform step 1, wherein,

when the current remaining amount of the audio data is great than the starting value, shortening the extraction cycle; and

when the current remaining amount of the audio data is low than the starting value, extending the extraction cycle.

In an exemplary embodiment, before the step of the audio data pushing system acquiring a source type corresponding to the audio data in the buffer zone, further includes:

the audio data pushing system recording the acquired current remaining amount of audio data;

when the number of the recorded remaining amount of audio data reaches to a first preset threshold value, the audio data pushing system calculating the average value of the recorded remaining amount of audio data, and updating the current remaining amount of the audio data to the calculated average value, and going to perform the step of the audio data pushing system acquiring the source type corresponding to the audio data in the buffer zone; and

after the step of the audio data pushing system recording the acquired current remaining amount of audio data, further includes:

when the number of the recorded remaining amount of audio data does not reach to the first preset threshold value, going to perform step 1.

In an exemplary embodiment, the step of adjusting the extraction cycle according to a size relationship between the current remaining amount of the audio data and the updated starting value includes:

revising the updated starting value based on a preset fault-tolerant value; and

adjusting the extraction cycle according to the size relationship between the current remaining amount of the audio data and the revised starting value.

In an exemplary embodiment, the step of when an audio data pushing system entering into an extraction cycle, extracting audio data from a buffer zone of the smart television, and pushing the audio data to a wireless communication protocol stack for transmission includes:

when the audio data pushing system entering into an extraction cycle, extracting the audio data from the buffer zone of the smart television, and compressing the extracted audio data;

the audio data pushing system pushing the compressed audio data to the wireless communication protocol stack for transmission.

In an exemplary embodiment, after the step of when an audio data pushing system entering into an extraction cycle, extracting audio data from a buffer zone of the smart television, and pushing the audio data to a wireless communication protocol stack for transmission, further includes:

the audio data pushing system receiving a packet loss rate returned from a target terminal of the audio data on the basis of received audio data;

the audio data pushing system adjusting a compression ratio of the compressing operation according to a size relationship between the packet loss rate and a second threshold value, wherein,

when the packet loss rate is great than the second preset threshold value, increasing the compression ratio of the compressing operation;

when the packet loss rate is low than the second preset threshold value, reducing the compression ratio of the compressing operation.

In addition, in order to achieve the aim, the present disclosure also provides an audio data pushing system, which includes:

an extracting module, configured to, when the audio data pushing system entering into an extraction cycle, extract audio data from a buffer zone of the smart television, and push the audio data to a wireless communication protocol stack for transmission;

an acquiring module, configured to acquire a current remaining amount of audio data in the buffer zone, and acquire a source type corresponding to the audio data in the buffer zone; and

a first adjusting module, configured to update a starting value for extracting audio data on the basis of a reference delay value corresponding to the source type, and adjust the extraction cycle according to a size relationship between the current remaining amount of the audio data and the updated starting value, wherein,

when the current remaining amount of the audio data is great than the starting value, shortening the extraction cycle; and

when the current remaining amount of the audio data is low than the starting value, extending the extraction cycle.

In an exemplary embodiment, the audio data pushing system further includes:
a recording module, configured to record the acquired current remaining amount of audio data; and when the number of the recorded remaining amount of audio data reaches to a first preset threshold value, calculate the average value of the recorded remaining amount of audio data, and update the current remaining amount of the audio data to the calculated average value.

In an exemplary embodiment, the first adjusting module is also configured to revise the updated starting value based on a preset fault-tolerant value; and adjust the extraction cycle according to the size relationship between the current remaining amount of the audio data and the revised starting value.

In an exemplary embodiment, the extracting module is also configured to, when entering into the extraction cycle, extract audio data from the buffer zone of the smart television, and compress the extracted audio data, and push the compressed audio data to the wireless communication protocol stack for transmission.

In an exemplary embodiment, the audio data pushing system further includes:

a second adjusting module, configured to receive a packet loss rate returned from a target terminal of the audio data on the basis of received audio data; and adjust a compression ratio of the compressing operation according to a size relationship between the packet loss rate and a second threshold value, wherein,
when the packet loss rate is great than the second preset threshold value, increasing the compression ratio of the compressing operation;
when the packet loss rate is low than the second preset threshold value, reducing the compression ratio of the compressing operation.

In the audio data pushing method and the audio data pushing system provided by the exemplary embodiment, after extracting audio data from the buffer zone of the smart television, and after pushing the audio data to the wireless communication protocol stack for transmission, the starting value for extracting audio data is updated on the basis of the preset extracting amount and the reference delay value corresponding to the source type, and the extraction cycle of the audio data is dynamically adjusted according to the size relationship between the current remaining amount of the audio data in the buffer zone after being extracted and the updated starting value, as such the extraction cycle corresponds to the speed of the smart television for separating audio data, therefore improving the transmission efficiency of the audio data.

## BRIEF DESCRIPTION OF THE DRAWINGS

FIG. 1 is a flow chart of the audio data pushing method of the present disclosure according to the first exemplary embodiment.
FIG. 2 is a functional module diagram of the audio data pushing system of the present disclosure according to an exemplary embodiment.

The realization of the aim, functional characteristics, advantages of the present disclosure are further described specifically with reference to the accompanying drawings and embodiments.

## DETAILED DESCRIPTION

It is to be understood that, the described embodiments are only some exemplary embodiments of the present disclosure, and the present disclosure is not limited to such embodiments.

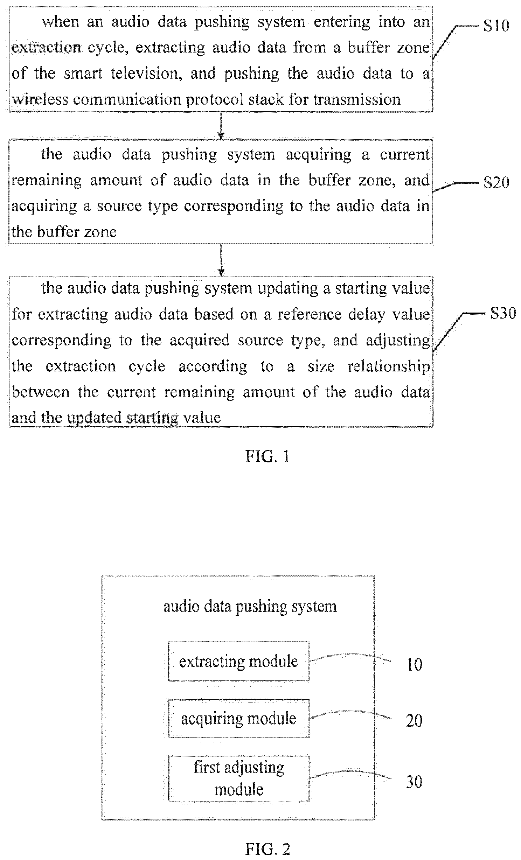

The present disclosure provides an audio data pushing method, applied to a smart television, referring to FIG. 1, in the first exemplary embodiment of the audio data pushing method of the present disclosure, the audio data pushing method includes the following steps:
step 10, when an audio data pushing system entering into an extraction cycle, extracting audio data from a buffer zone of the smart television, and pushing the audio data to a wireless communication protocol stack for transmission;

It should be noted that, the audio data pushing system in the exemplary embodiment runs on the smart television. Of course, the audio data pushing system can also run on other smart devices, such as a computer, a tablet computer, a smart phone, etc. Preferably, in the exemplary embodiment, the audio data pushing system runs on the smart television.

In the exemplary embodiment, after an external source is inputted into the smart television, the smart television decodes the external source to extract the audio signal, and converts the extracted audio signal to audio data which is cached in the buffer zone and waits to be sent. The format of the audio data includes, but is not limited to, Pulse-code modulation (PCM) and Linear Pulse-code modulation (LPCM), etc.

When the audio data pushing system enters into the extraction cycle, the audio data pushing system extracts audio data from the buffer zone of the smart television, and pushes the audio data to the wireless communication protocol stack for transmission. The extraction cycle refers to an initial extraction cycle which is estimated by the audio data pushing system based on the hardware performance of the smart television, to visualize this, if the hardware performance of the smart television is high, the initial extraction cycle is short, if the hardware performance of the smart television is low, the initial extraction cycle is long. In addition, the preset extracting amount of the audio data of the audio data pushing system is preset according to the wireless transmission capacity of the smart television, such as, the audio data pushing system extracts 512bit audio data from the buffer zone of the smart television every 50ms, and pushes the audio data to the wireless communication protocol stack for transmission.

It should be noted that, the wireless communication protocol stack includes, but is not limited to, blue-tooth protocol stack, Wi-Fi protocol stack, after the audio data pushing system extracts the audio data from the buffer zone, the audio data pushing system pushes the audio data to which kind of the wireless communication protocol stack, it depends on the wireless connection mode between the smart television and the target terminal of the audio data. For example, if the smart television is connected with the target terminal of the audio data through blue-tooth, after the audio data pushing system extracts the audio data from the buffer zone of the smart television, the audio data pushing system pushes the extracted audio data to the blue-tooth protocol stack of the smart television, and the blue-tooth module of the smart television sends the audio data to the target terminal; again for instance, if the smart television is connected with the target terminal of the audio data through Wi-Fi, after the audio data pushing system extracts the audio data from the buffer zone of the smart television, the audio data pushing system pushes the extracted audio data to the Wi-Fi protocol stack of the smart television, the Wi-Fi module of the smart television sends the audio data to the target terminal.

Step 20, the audio data pushing system acquiring a current remaining amount of audio data in the buffer zone, and acquiring a source type corresponding to the audio data in the buffer zone;

In the exemplary embodiment, after extracting the audio data from the buffer zone and pushing the audio data to the wireless communication protocol stack, the audio data pushing system acquires the current remaining amount of the audio data in the buffer zone, and acquires a source type corresponding to the audio data in the buffer zone. The source type corresponding to the audio data, that is the source type of the inputted source of the audio data extracted by the smart television, usually includes, but is not limited to, RMVB, MP4, MKV, AVI, FLV and WMV.

Step 30, the audio data pushing system updating a starting value for extracting audio data based on a reference delay value corresponding to the source type, and adjusting the extraction cycle according to a size relationship between the current remaining amount of the audio data and the updated starting value, and going to perform step 10, therein,

when the current remaining amount of the audio data is great than the starting value, shortening the extraction cycle; and

when the current remaining amount of the audio data is low than the starting value, extending the extraction cycle.

It should be noted that, for the inputted information sources with different types, the smart television takes different times to separate the audio data from the information sources, that is, the speeds of separating the audio data are different, accordingly, the delay effects of sending the audio data to the target terminal are different. Therefore, the purpose of the exemplary embodiment is dynamically adjusting the extracting cycle for extracting audio data according to the source type of the inputted source information, which maintaining the low latency of the audio data transmission, and achieving the continuously transmitting of the audio data.

In detail, when the source type of the inputted source of the audio data is determined, the size of the buffer zone can be updated according to the following formula:

$$Buf = Cap * k * N;$$

Buf refers to the size of the buffer zone, Cap refers to the preset extracting amount of the audio data, k refers to the reference delay value corresponding to the determined source type, N refers to empirical value, the range of the empirical value is $[4, +\infty)$, in the exemplary embodiment, the empirical value is four.

It should be noted that, the reference delay value can be obtained by verifying a great deal of tests, as shown in table 1, table 1 shows the mapping relationship between the different source types and the reference delay values (the specific value is not shown here).

Table 1

| source type | reference delay value |
|-------------|-----------------------|
| RMV | $k_{rmvb}$ |
| MP4 | $k_{mp4}$ |
| MKV | $k_{mkv}$ |
| AVI | $k_{avi}$ |
| FLV | $k_{flv}$ |
| WMV | $k_{wmv}$ |

After the size of the buffer zone is updated, the starting value is updated according to the size of the updated buffer zone, as follows:

$$Sta = Buf/2 \; ;$$

Sta refers to the target value of updating starting value, that is a calculated value which used for updating the currently initial starting value to Sta. To visualize this, the starting value is a value used for starting the audio data pushing system to extract audio data, when the audio data in the buffer zone reaches the starting value and the extracting cycle, the audio data pushing system extracts the audio data from the buffer zone and pushes the audio data to the wireless communication protocol stack for transmission.

In the exemplary embodiment, after acquiring the current remaining amount of audio data in the buffer zone after being extracted, and after updating the starting value, the audio data pushing system adjusts the extracting cycle according to the size relationship between the currently audio data remaining amount and the starting value. In detail, if the currently audio data remaining amount is great than the starting value, it means that after the audio data is extracted from the extracting cycle, the remaining audio data is enough for starting to extract the audio data from the next cycle, at this time, the extracting cycle is shortened, that is, the extracting rate of the audio data is increased; if the currently audio data remaining amount is low than the starting value, it means that after the audio data is extracted from the extracting cycle, the remaining audio data is not enough for starting to extract the audio data from the next cycle, at this time, the extracting cycle is extended (as such the smart television has enough time to separate the audio data from the inputted information source), that is, the extracting rate of the audio data is decreased.

In addition, if the currently audio data remaining amount is equal to the starting value, it means that after the audio data is extracted in this extracting cycle, the remaining audio data is just enough for starting to extract the audio data in the next cycle, at this time, the extracting cycle is not adjusted, that is, the extracting ratio of the currently audio data is maintained.

It should be noted that, the adjusting amount for adjusting the extracting cycle can be adjusted according to an actual requirement, the specified value of the adjusting amount is not limited in the exemplary embodiment, while the adjusted extracting cycle cannot be great than an interval between intermittent sounds felt by human ear, cannot be low than an auditory response time of human ear. In the audio data pushing method provided by the exemplary embodiment, after extracting audio data from the buffer zone of the smart television, and pushing the audio data to the wireless communication protocol stack for transmission, the starting value for extracting audio data is updated on the basis of the preset extracting amount and the reference delay value corresponding to the source type, and the extraction cycle of the audio data is dynamically adjusted according to the size relationship between the current remaining amount of the audio data in the buffer zone after being extracted and the updated starting value, as such the extraction cycle corresponds to the speed of the smart television for separating audio data, therefore improving the transmission efficiency of the audio data.

Furthermore, based on the first exemplary embodiment, the present disclosure provides an audio data pushing method according to the second exemplary embodiment, in the exemplary embodiment, before the audio data pushing system acquires the information source type corresponding to the audio data in the buffer zone, the audio data pushing method includes:

the audio data pushing system recording the acquired current remaining amount of audio data; when the number of the recorded remaining amount of audio data reaches to a first preset threshold value, the audio data pushing system calculates the average value of the recorded remaining amount of audio data, and update the current remaining amount of the audio data to the calculated average value, and go to perform the step of the audio data pushing system acquiring the source type corresponding to the audio data in the buffer zone.

After the step of the audio data pushing system recording the acquired current remaining amount of audio data, the method further includes: when the number of the recorded remaining amount of audio data does not reach to the first preset threshold value, going to perform step 10.

Skilled person in the art should be noted that, in the actual using process of the smart television, in a certain time, the inputted information source of the smart television is normally unchanged, accordingly, the speed of the smart television for decoding and separating the audio data from the inputted information source are stable, that is, in the actual application, although the starting value for starting to push the audio data is updated in each extracting cycle, but the extracting cycle is adjusted for a long time, which wasting the resource. Therefore, in the exemplary embodiment, the first preset threshold value is set to limit the adjusting of the extracting cycle.

In detail, in the exemplary embodiment, after the audio data pushing system extracts the audio data from the buffer zone of the smart television in each extracting cycle, and sends the audio data to the wireless communication protocol stack for transmission, and after the audio data pushing system acquires the current remaining amount of the audio data in the buffer zone, records remaining amount of audio data in the buffer zone after being extracted; if the number of the recorded remaining amount of the audio data which reaches the first preset threshold value is defined as i, the i is set to o, simultaneously, the average value of the remaining amount of the recorded audio data is calculated, and the calculated average value is defined as the current remaining amount of the audio data (that is, the calculated average value is updated to the current remaining amount of the audio data), and then the extracting cycle is adjusted according to the preceding exemplary embodiments, no need to repeat again. The first preset threshold value can be set according to the actual requirement, for example, in the exemplary embodiment, the first preset threshold value is set to 500.

In addition, when the number i of the recorded remaining amount of the audio data does not reach the first preset threshold value, going to perform the step S10, for keeping record, and the adjusting of the extracting cycle is withheld.

The exemplary embodiment determines whether the extracting cycle needs to be adjusted at a certain interval, and determines how to adjust, the exemplary embodiment reduces the waste of the resource on the basis of maintaining the low latency of audio data transmission and achieving the continuously transmitting of the audio data.

Furthermore, based on the first or second exemplary embodiments, the present disclosure provides an audio data pushing method according to the third exemplary embodiment, in the exemplary embodiment, the step of adjusting the extracting cycle according to size relationship between the current remaining amount of the audio data and the starting value includes:

> revising the updated starting value based on a preset fault-tolerant value;
> adjusting the extraction cycle according to the size relationship between the current remaining amount of the audio data and the revised starting value.

It should be noted that, in order to make the adjusting of the extracting cycle more smoothly, the exemplary embodiment further revises the updated starting value by the preset fault-tolerant value, and uses the revised starting value to determine whether the extracting cycle needs to be adjusted, and to determine how to adjust the extracting cycle. The fault-tolerant value can be an empirical value, and can be obtained by verifying a great deal of tests.

Taking the updated starting value recorded as Sta, and the fault-tolerant value recorded as Ft, as an example:
after acquiring the current remaining amount of audio data in the buffer zone after being extracted, and updating the starting value, if the current remaining amount of audio data is great than Sta+Ft, the extracting cycle is shortened; if the current remaining amount of audio data is low than or equal to Sta-Ft, the extracting cycle is extended; if the current remaining amount of audio data is low than Sta+Ft, and the current remaining amount of audio data is great than Sta-Ft, and the extracting cycle is not adjusted.

To visualize this, when the current remaining amount of the audio data is existed at a certain positive and negative interval (that is the revised interval) of the updated starting value, the currently remaining amount of the audio data is equal to the updated starting value is determined, and the adjusting of the extracting cycle is withheld, as such the adjusting of the extracting cycle is much more smooth.

Furthermore, based on any one of the above exemplary embodiments, the present disclosure provides an audio data pushing method according to the fourth exemplary embodiment, in the exemplary embodiment, the step S10 includes:

when an audio data pushing system entering into an extraction cycle, extracting audio data from a buffer zone of the smart television, and compressing the extracted audio data;
the audio data pushing system pushing the compressed audio data to a wireless communication protocol stack for transmission.

Based on the description of the foregoing exemplary embodiments, skilled person in the art can understand that, the pushed audio data is the audio data which is decoded, compared with the audio data without being decoded, the amount of the decoded audio data is greater, if the decoded audio data is directly transmitted over the network, especially over the wireless network, it is easy to cause the losing of the packet, which causing part of the audio data losing during the transmitting process, further affecting the playback quality of the target terminal of the audio data.

Therefore, in the exemplary embodiment, after the audio data pushing system extracts the audio data from the buffer zone of the smart television, the audio data pushing system compresses the extracted audio data, then pushes the compressed audio data to the wireless communication protocol stack of the smart television, the related wireless communication module of the smart television sends the compressed audio data to the target terminal, as such the target terminal decompresses the compressed audio data to display. The compression algorithm adopted by the compressing operation includes, but is not limited to, SBC and ALAC, the compression algorithm can be chosen according to the actual requirement.

In addition, as the audio data is compressed, in order to ensure the target terminal can be play correctly, the compressed audio data carries compressing information, the compressing information is configured to represent the compression algorithm adopted by the audio data pushing system, as such the target terminal conducts the corresponding decompressing operation.

The exemplary embodiment can further reduce the delay of transmitting the audio data, and improve the transmitting efficiency of the audio data through compressing.

Based on the fourth exemplary embodiment, the present disclosure provides an audio data pushing method according to the fifth exemplary embodiment, in the exemplary embodiment, after step S10, the audio data pushing method further includes:

the audio data pushing system receiving a packet loss rate returned from a target terminal of the audio data on the basis of received audio data;
the audio data pushing system adjusting a compression ratio of the compressing operation according to a size relationship between the packet loss rate and a second threshold value, and,
when the packet loss rate is great than the second preset threshold value, increasing the compression ratio of the compressing operation;

when the packet loss rate is low than the second preset threshold value, reducing the compression ratio of the compressing operation.

Skilled person in the art can understand, any data is transmitted in a form of packet over the wired or wireless network, losing packet is inevitably, as such, the aim of the exemplary embodiment is to control the packet loss rate in a reasonable range, and to reduce the impact of the packet loss rate on the audio data playback, if possible

In the exemplary embodiment, after the target terminal of the audio data receives the audio data, and returns the packet loss rate to the smart television according to the received audio data, the audio data pushing system receives the packet loss rate returned from the target terminal based on the smart television. After the audio data pushing system receives the packet loss rate returned from the target terminal, determines whether the compression rate of the compressing operation needs to be adjusted according to the size relationship between the packet loss rate and the second preset threshold value, and how to adjust the compression rate of the compressing operation. The second preset threshold value can be set on the basis of having no effect on the packet loss rate of the playback quality of the target terminal.

In detail, if the packet loss rate is great than the second preset threshold value, the compression ratio of the compressing operation is increased; if the packet loss rate is low than the second preset threshold value, the compression ratio of the compressing operation is reduced; if the packet loss rate is equal to the second preset threshold value, the compression ratio of the compressing operation is not adjusted, that is, the compression ratio of the compressing operation is maintained. For example, when adjusting the compression ratio, if the compression ratio needs to be increased, the audio data pushing system can replace the current compression algorithm with a compression algorithm having a greater compression ratio; if the compression ratio needs to be decreased, the audio data pushing system can replace the current compression algorithm with a compression algorithm having a lower compression ratio.

The exemplary embodiment dynamically adjust the compression ratio of the compressing operation, to further improve the transmission efficiency of the audio data on the basis of the ensuring the playback quality of the audio data.

The present disclosure further provides an audio data pushing system, applied to a smart television, referring FIG. 2, in the first exemplary embodiment of the audio data pushing system of the present disclosure, the audio data pushing system includes :

an extracting module 10, configured to, when the audio data pushing system entering into an extraction cycle, extract audio data from a buffer zone of the smart television, and push the audio data to a wireless communication protocol stack for transmission;

an acquiring module 20, configured to acquire a current remaining amount of audio data in the buffer zone, and acquire a source type corresponding to the audio data in the buffer zone; and

a first adjusting module 30, configured to update a starting value for extracting audio data based on a reference delay value corresponding to the source type, and adjust the extraction cycle according to a size relationship between the current remaining amount of the audio data and the updated starting value, and

when the current remaining amount of the audio data is great than the starting value, shortening the extraction cycle; and

when the current remaining amount of the audio data is low than the starting value, extending the extraction cycle.

Furthermore, based on the first exemplary embodiment, the present disclosure provides an audio data pushing system according to a second exemplary embodiment of the present disclosure, in the exemplary embodiment, the audio data pushing system further includes:

a recording module, configured to record the acquired current remaining amount of audio data; and when the number of the recorded remaining amount of audio data reaches to a first preset threshold value, calculate the average value of the recorded remaining amount of audio data, and update the current remaining amount of the audio data to the calculated average value.

Furthermore, based on the first exemplary embodiment or the second exemplary embodiment, the present disclosure provides an audio data pushing system according to a third exemplary embodiment of the present disclosure, in the exemplary embodiment, the first adjusting module 30 is also configured to revise the updated starting value based on a preset fault-tolerant value; and adjust the extraction cycle according to the size relationship between the current remaining amount of the audio data and the revised starting value.

Furthermore, based on any one of the above exemplary embodiments, the present disclosure provides an audio data pushing system according to a fourth exemplary embodiment of the present disclosure, in the exemplary embodiment, the extracting module 10 is also configured to, when entering into the extraction cycle, extract audio data from the buffer zone of the smart television, and compress the extracted audio data, and push the compressed audio data to the wireless communication protocol stack for transmission.

Based on the fourth exemplary embodiment, the present disclosure provides an audio data pushing system according to a fifth exemplary embodiment of the present disclosure, in the exemplary embodiment, the audio data pushing system includes:

a second adjusting module, configured to receive a packet loss rate returned from a target terminal of the audio data on the basis of received audio data; and adjust a compression ratio of the compressing operation according to a size relationship between the packet loss rate and a second threshold value, and, when the packet loss rate is great than the second preset threshold value, increasing the compression ratio of the compressing operation; when the packet loss rate is low than the second preset threshold value, reducing the compression ratio of the compressing operation.

The foregoing description merely depicts some illustrative embodiments of the present application and therefore is not intended to limit the scope of the application. An equivalent structural or flow changes made by using the content of the specification and drawings of the present application, or any direct or indirect applications of the disclosure on any other related fields shall all fall in the scope of the application.

**Claims**

1. An audio data pushing method, applied to a smart television, comprising the following steps:

step 1, when an audio data pushing system entering into an extraction cycle, extracting audio data from a buffer zone of the smart television, compressing the extracted audio data, and pushing the compressed audio data to a wireless communication protocol stack for transmission;
step 2, the audio data pushing system acquiring a current remaining amount of audio data in the buffer zone, and acquiring a source type corresponding to the audio data in the buffer zone; and
step 3, the audio data pushing system updating a starting value for extracting audio data based on a reference delay value corresponding to the source type, and revising the updated starting value based on a preset fault-tolerant value, adjusting the extraction cycle according to a size relationship between the current remaining amount of the audio data and the revised starting value, and going to perform step 1, wherein, when the current remaining amount of the audio data is great than the starting value, shortening the extraction cycle; and when the current remaining amount of the audio data is low than the starting value, extending the extraction cycle.

2. The audio data pushing method according to claim 1, wherein before the step of the audio data pushing system acquiring a source type corresponding to the audio data in the buffer zone, further comprises:

the audio data pushing system recording the acquired current remaining amount of audio data; when the number of the recorded remaining amount of audio data reaches to a first preset threshold value, the audio data pushing system calculating the average value of the recorded remaining amount of audio data, and updating the current remaining amount of the audio data to the calculated average value, and going to perform the step of the audio data pushing system acquiring the source type corresponding to the audio data in the buffer zone.

3. The audio data pushing method according to claim 2, wherein after the step of the audio data pushing system recording the acquired current remaining amount of audio data, further comprises:

when the number of the recorded remaining amount of audio data does not reach to the first preset threshold value, going to perform step 1.

4. The audio data pushing method according to claim 1, wherein after the step of pushing the compressed audio data to a wireless communication protocol stack for transmission, further comprises:

the audio data pushing system receiving a packet loss rate returned from a target terminal of the audio data on the basis of received audio data; the audio data pushing system adjusting a compression ratio of the compressing operation according to a size relationship between the packet loss rate and a second threshold value, wherein, when the packet loss rate is great than the second preset threshold value, increasing the compression ratio of the compressing operation; when the packet loss rate is low than the second preset threshold value, reducing the compression ratio of the compressing operation.

5. The audio data pushing method according to claim 2, wherein after the step of pushing the compressed audio data to a wireless communication protocol stack for transmission, further comprises:

the audio data pushing system receiving a packet loss rate returned from a target terminal of the audio data on the basis of received audio data; the audio data pushing system adjusting a compression ratio of the compressing operation according to a size relationship between the packet loss rate and a second threshold value, wherein, when the packet loss rate is great than the second preset threshold value, increasing the compression ratio of the compressing operation; when the packet loss rate is low than the second preset threshold value, reducing the compression ratio of the compressing operation.

6. The audio data pushing method according to claim 3, wherein after the step of pushing the compressed audio data to a wireless communication protocol stack for transmission, further comprises:

the audio data pushing system receiving a packet loss rate returned from a target terminal of the audio data on the basis of received audio data; the audio data pushing system adjusting a compression ratio of the compressing operation according to a size relationship between the packet loss rate and a second threshold value, wherein, when the packet loss rate is great than the second preset threshold value, increasing the compression ratio of the compressing operation; when the packet loss rate is low than the second preset threshold value, reducing the compression ratio of the compressing operation.

7. An audio data pushing method, applied to a smart television, comprising the following steps:

step 1, when an audio data pushing system entering into an extraction cycle, extracting audio data from a buffer zone of the smart television, and pushing the audio data to a wireless communication protocol stack for transmission; step 2, the audio data pushing system acquiring a current remaining amount of audio data in the buffer zone, and acquiring a source type corresponding to the audio data in the buffer zone; and step 3, the audio data pushing system updating a starting value for extracting audio data based on a reference delay value corresponding to the source type, and adjusting the extraction cycle according to a size relationship between the current remaining amount of the audio data and the updated starting value, and going to perform step 1, wherein, when the current remaining amount of the audio data is great than the starting value, shortening the extraction cycle; and when the current remaining amount of the audio data is low than the starting value, extending the extraction cycle.

8. The audio data pushing method according to claim 7, wherein before the step of the audio data pushing system acquiring a source type corresponding to the audio data in the buffer zone, further comprises:

the audio data pushing system recording the acquired current remaining amount of audio data; when the number of the recorded remaining amount of audio data reaches to a first preset threshold value, the audio data pushing system calculating the average value of the recorded remaining amount of audio data, and updating the current remaining amount of the audio data to the calculated average value, and going to perform the step of the audio data pushing system acquiring the source type corresponding to the audio data in the buffer zone; and after the step of the audio data pushing system recording the acquired current remaining amount of audio data, further comprises:

when the number of the recorded remaining amount of audio data does not reach to the first preset threshold value, going to perform step 1.

9. The audio data pushing method according to claim 7, wherein the step of adjusting the extraction cycle according to a size relationship between the current remaining amount of the audio data and the updated starting value comprises:

revising the updated starting value based on a preset fault-tolerant value; and adjusting the extraction cycle according to the size relationship between the current remaining amount of the audio data and the revised starting value.

10. The audio data pushing method according to claim 7, wherein the step of when an audio data pushing system entering into an extraction cycle, extracting audio data from a buffer zone of the smart television, and pushing the audio data to a wireless communication protocol stack for transmission comprises:

when the audio data pushing system entering into an extraction cycle, extracting the audio data from the buffer zone of the smart television, and compressing the extracted audio data; the audio data pushing system pushing the compressed audio data to the wireless communication protocol stack for transmission.

11. The audio data pushing method according to claim 8, wherein the step of when an audio data pushing system entering into an extraction cycle, extracting audio data from a buffer zone of the smart television, and pushing the audio data to a wireless communication protocol stack for transmission comprises:

when the audio data pushing system entering into an extraction cycle, extracting the audio data from the buffer zone of the smart television, and compressing the extracted audio data; the audio data pushing system pushing the compressed audio data to the wireless communication protocol stack for transmission.

12. The audio data pushing method according to claim 10, wherein after the step of when an audio data pushing system entering into an extraction cycle, extracting audio data from a buffer zone of the smart television, and pushing the audio data to a wireless communication protocol stack for transmission, further comprises:

the audio data pushing system receiving a packet loss rate returned from a target terminal of the audio data on the basis of received audio data; the audio data pushing system adjusting a compression ratio of the compressing operation according to a size relationship between the packet loss rate and a second threshold value, wherein, when the packet loss rate is great than the second preset threshold value, increasing the compression ratio of the compressing operation; when the packet loss rate is low than the second preset threshold value, reducing the compression ratio of the compressing operation.

13. The audio data pushing method according to claim 11, wherein after the step of when an audio data pushing system entering into an extraction cycle, extracting audio data from a buffer zone of the smart television, and pushing the audio data to a wireless communication protocol stack for transmission, further comprises:

the audio data pushing system receiving a packet loss rate returned from a target terminal of the audio data on the basis of received audio data; the audio data pushing system adjusting a compression ratio of the compressing operation according to a size relationship between the packet loss rate and a second threshold value, wherein, when the packet loss rate is great than the second preset threshold value, increasing the compression ratio of the compressing operation; when the packet loss rate is low than the second preset threshold value, reducing the compression ratio of the compressing operation.

14. An audio data pushing system, applied to a smart television, comprising:

an extracting module, configured to, when the audio data pushing system entering into an extraction cycle, extract audio data from a buffer zone of the smart television, and push the audio data to a wireless communication protocol stack for transmission; an acquiring module, configured to acquire a current remaining amount of audio data in the buffer zone, and acquire a source type corresponding to the audio data in the buffer zone; and a first adjusting module, configured to update a starting value for extracting audio data based on a reference delay value corresponding to the source type, and adjust the extraction cycle according to a size relationship between the current remaining amount of the audio data and the updated starting value, wherein, when the current remaining amount of the audio data is great than the starting value, shortening the extraction cycle; and when the current remaining amount of the audio data is low than the starting value, extending the extraction cycle.

15. The audio data pushing system according to claim 14, wherein the audio data pushing system further comprises:

a recording module, configured to record the acquired current remaining amount of audio data; and when the number of the recorded remaining amount of audio data reaches to a first preset threshold value, calculate the average value of the recorded remaining amount of audio data, and update the current remaining amount of the audio data to the calculated average value.

16. The audio data pushing system according to claim 14, wherein the first adjusting module is also configured to revise the updated starting value based on a preset fault-tolerant value; and adjust the extraction cycle according to the size relationship between the current remaining amount of the audio data and the revised starting value.

17. The audio data pushing system according to claim 14, wherein the extracting module is also configured to, when entering into the extraction cycle, extract audio data from the buffer zone of the smart television, and compress the extracted audio data, and push the compressed audio data to the wireless communication protocol stack for transmission.

18. The audio data pushing system according to claim 15, wherein the extracting module is also configured to, when entering into the extraction cycle, extract audio data from the buffer zone of the smart television, and compress the extracted audio data, and push the compressed audio data to the wireless communication protocol stack for transmission.

19. The audio data pushing system according to claim 17, wherein the audio data pushing system further comprises:

> a second adjusting module, configured to receive a packet loss rate returned from a target terminal of the audio data on the basis of received audio data; and adjust a compression ratio of the compressing operation according to a size relationship between the packet loss rate and a second threshold value, wherein, when the packet loss rate is great than the second preset threshold value, increasing the compression ratio of the compressing operation; when the packet loss rate is low than the second preset threshold value, reducing the compression ratio of the compressing operation.

20. The audio data pushing system according to claim 18, wherein the audio data pushing system further comprises:

> a second adjusting module, configured to receive a packet loss rate returned from a target terminal of the audio data on the basis of received audio data; and adjust a compression ratio of the compressing operation according to a size relationship between the packet loss rate and a second threshold value, wherein, when the packet loss rate is great than the second preset threshold value, increasing the compression ratio of the compressing operation; when the packet loss rate is low than the second preset threshold value, reducing the compression ratio of the compressing operation.

when an audio data pushing system entering into an extraction cycle, extracting audio data from a buffer zone of the smart television, and pushing the audio data to a wireless communication protocol stack for transmission

— S10

the audio data pushing system acquiring a current remaining amount of audio data in the buffer zone, and acquiring a source type corresponding to the audio data in the buffer zone

— S20

the audio data pushing system updating a starting value for extracting audio data based on a reference delay value corresponding to the acquired source type, and adjusting the extraction cycle according to a size relationship between the current remaining amount of the audio data and the updated starting value

— S30

FIG. 1

audio data pushing system

extracting module — 10

acquiring module — 20

first adjusting module — 30

FIG. 2

# INTERNATIONAL SEARCH REPORT

| International application No. |
| --- |
| **PCT/CN2016/084863** |

### A. CLASSIFICATION OF SUBJECT MATTER

H04N 21/439 (2011.01) i

According to International Patent Classification (IPC) or to both national classification and IPC

### B. FIELDS SEARCHED

Minimum documentation searched (classification system followed by classification symbols)

H04N

Documentation searched other than minimum documentation to the extent that such documents are included in the fields searched

Electronic data base consulted during the international search (name of data base and, where practicable, search terms used)

CNKI, WPI, EPODOC, CNPAT: information source, audio, video, compress, remain, leavings, delay, period, time, larger, less than, more than, source

### C. DOCUMENTS CONSIDERED TO BE RELEVANT

| Category* | Citation of document, with indication, where appropriate, of the relevant passages | Relevant to claim No. |
| --- | --- | --- |
| A | CN 101466034 A (HUAWEI TECHNOLOGIES CO., LTD.), 24 June 2009 (24.06.2009), description, page 5, paragraph 1 to page 6, penultimate paragraph 2 | 1-20 |
| A | CN 104244033 A (LESHI ZHIXIN ELECTRONIC SCIENCE AND TECHNOLOGY (TIANJIN) CO., LTD.), 24 December 2014 (24.12.2014), the whole document | 1-20 |
| A | US 2011205427 A1 (TENCENT TECH. SHENZHEN CO., LTD.), 25 August 2011 (25.08.2011), the whole document | 1-20 |

☐ Further documents are listed in the continuation of Box C.  ☒ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 05 September 2016 (05.09.2016) | **23 September 2016 (23.09.2016)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **LIU, Juan** Telephone No.: (86-10) **62413912** |
| --- | --- |

Form PCT/ISA/210 (second sheet) (July 2009)

## INTERNATIONAL SEARCH REPORT
### Information on patent family members

International application No.

**PCT/CN2016/084863**

| Patent Documents referred in the Report | Publication Date | Patent Family | Publication Date |
|---|---|---|---|
| CN 101466034 A | 24 June 2009 | US 2010168885 A1 | 01 July 2010 |
| CN 104244033 A | 24 December 2014 | WO 2015074623 A1 | 28 May 2015 |
| US 2011205427 A1 | 25 August 2011 | RU 2011121768 A | 27 March 2013 |
| | | CN 101500117 A | 05 August 2009 |
| | | CA 2742858 A1 | 26 August 2010 |
| | | WO 2010094234 A1 | 26 August 2010 |
| | | MX 2011005782 A | 30 June 2011 |
| | | BR PI1006010 A2 | 05 April 2016 |

Form PCT/ISA/210 (patent family annex) (July 2009)